(19) Europäisches Patentamt / European Patent Office / Office européen des brevets

(11) **EP 4 571 671 B1**

(12) **EUROPEAN PATENT SPECIFICATION**

(45) Date of publication and mention
of the grant of the patent:
**06.05.2026   Bulletin 2026/19**

(21) Application number: **23904774.9**

(22) Date of filing: **18.12.2023**

(51) International Patent Classification (IPC):
**G06T 5/70** *(2024.01)*     **G06T 5/20** *(2006.01)*
**G06V 10/30** *(2022.01)*     **G06T 5/94** *(2024.01)*
**G06V 10/74** *(2022.01)*

(52) Cooperative Patent Classification (CPC):
**G06V 10/761; G06T 5/20; G06T 5/70;**
G06T 2207/10048; G06T 2207/20182

(86) International application number:
**PCT/CN2023/139435**

(87) International publication number:
**WO 2025/076994 (17.04.2025 Gazette 2025/16)**

(54) **FPGA-BASED NLMEANS NOISE-REDUCTION SIMPLIFICATION METHOD AND SYSTEM FOR INFRARED IMAGE, AND MEDIUM AND DEVICE**

FPGA-BASIERTES NLSTEAN-RAUSCHVERMINDERUNGSVEREINFACHUNGSVERFAHREN UND -SYSTEM FÜR INFRAROTBILDER SOWIE MEDIUM UND VORRICHTUNG

PROCÉDÉ ET SYSTÈME DE SIMPLIFICATION DE RÉDUCTION DE BRUIT PAR MOYENNES NON LOCALES À BASE DE FPGA POUR IMAGE INFRAROUGE, ET SUPPORT ET DISPOSITIF

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **13.10.2023   CN 202311332049**

(43) Date of publication of application:
**18.06.2025   Bulletin 2025/25**

(73) Proprietor: **Shanghai Racing Visual Arts and Science
Technology Co., Ltd.
Shanghai 200331 (CN)**

(72) Inventors:
• **LUO, Yan**
  **Shanghai 200331 (CN)**
• **LUO, Bing**
  **Shanghai 200331 (CN)**
• **LI, Jianghui**
  **Shanghai 200331 (CN)**
• **CHEN, Chengzhi**
  **Shanghai 200331 (CN)**
• **ZHANG, Lei**
  **Shanghai 200331 (CN)**

(74) Representative: **Novagraaf Group
Chemin de l'Echo 3
1213 Onex / Geneva (CH)**

(56) References cited:
CN-A- 104 298 775     CN-A- 104 463 813
CN-A- 108 391 067     CN-A- 113 269 687
CN-A- 113 888 440     CN-A- 113 888 440
CN-A- 116 403 077     CN-B- 111 260 580
US-A1- 2014 064 615     US-A1- 2014 064 615

• EBDELLI MOUNIRA ET AL: "Analysis of patch-based similarity metrics: Application to denoising", ICASSP, IEEE INTERNATIONAL CONFERENCE ON ACOUSTICS, SPEECH AND SIGNAL PROCESSING - PROCEEDINGS 1999 IEEE, IEEE, 26 May 2013 (2013-05-26), pages 2070 - 2074, XP032508314, ISSN: 1520-6149, ISBN: 978-0-7803-5041-0, [retrieved on 20131018], DOI: 10.1109/ICASSP.2013.6638018

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

## TECHNICAL FIELD

The present disclosure relates to the technical field of denoising an infrared image, and specifically, to a simplified method and system for denoising an infrared image by using non-local means (NLMeans) based on a field programmable gate array (FPGA), a medium, and a device.

## BACKGROUND

At present, infrared imaging technology has been widely applied in military, industrial, agricultural, and other fields. Increasing application demands have put forward a higher requirement for quality of an infrared image. However, affected by factors such as a detector material, processing method, and external environment, the infrared image often contains some noise, which not only reduces the quality of the infrared image but also affects extraction of effective information in the infrared image. Numerous studies have been conducted on denoising of the infrared image in the industry, and NLMeans is one of most effective denoising algorithms.

Many infrared devices are portable devices. Therefore, many infrared devices are based on an FPGA platform to implement an algorithm, which can well meet a usage demand of a real-time scene. However, an FPGA has a certain resource limitation and cannot perform particularly complex floating-point process calculation. Therefore, some algorithms have complex calculation processes and are inconveniently implemented on the FPGA.

The patent document CN107590783A (application No. 201710754287.0) discloses an FPGA-based image denoising method, including: inputting image data into a template generation module, processing row data of a video image by using a 1x7 neighborhood template, and calculating the corresponding noise variance based on an amplitude of input noise; performing, by using a median filtering module, median filtering on seven rows of generated original image data and the noise variance, calculating medians of original video image data under four types of strides as well as the respective corresponding noise variance medians, and outputting a result to a data analysis and selection module; calculating a range of an image signal for each stride based on video image data and noise variances corresponding to different strides, and selecting an optimal stride based on the range; and outputting data through a data output module.

In response to the above problems, based on a special structure of the FPGA and a traditional NLMeans denoising algorithm, the present disclosure provides a simplified algorithm for denoising the infrared image by using the NLMeans based on the FPGA. This algorithm can effectively remove noise from an original infrared image and can be easily implemented on the FPGA.

## SUMMARY

In order to overcome the defects in the prior art, the present disclosure is intended to provide a simplified method and system for denoising an infrared image by using NLMeans based on an FPGA, a medium, and a device.

A simplified method for denoising an infrared image by using NLMeans based on an FPGA is provided according to the present disclosure, including:

> step S1: determining a size of a search window and a size of a matching window;
> step S2: performing linear superposition on a Manhattan distance and a Chebyshev distance to calculate a similarity between each matching block and a central block; and
> step S3: calculating a weight of each matching block based on the similarity, and calculating a current denoising result based on each matching block and the corresponding weight.

Preferably, the step S1 includes: determining the size of the search window as N*N and the size of the matching window as d*d, where when N=11 and d=3, there are a total of 81 matching blocks.

Preferably, in the step S2, a following formula is adopted:

$$S_i = (1-a)\sum |a_i - b_i| + a\max(|a_i - b_i|),$$

where $S_i$ represents the similarity; $a$ represents a parameter, and each of $a_i$ and $b_i$ represents a pixel value of an image block; and the subscript i represents a same position in two image blocks, where i = 1,2...,9 .

A simplified system for denoising an infrared image by using NLMeans based on an FPGA is provided according to the present disclosure, including:

> a module M1 configured to determine a size of a search window and a size of a matching window;
> a module M2 configured to perform linear superposition on a Manhattan distance and a Chebyshev distance to calculate a similarity between each matching block and a central block; and
> a module M3 configured to calculate a weight of each matching block based on the similarity, and calculate a current denoising result based on each matching block and the corresponding weight.

Preferably, the module M1 determines the size of the search window as N*N and the size of the matching window as d*d; and when N=11 and d=3, there are a total of 81 matching blocks.

Preferably, the module M2 adopts a following formula:

$$S_i = (1-a)\sum |a_i - b_i| + a\max(|a_i - b_i|),$$

where $S_i$ represents the similarity; $a$ represents a parameter, and each of $a_i$ and $b_i$ represents a pixel value of an image block; and the subscript $i$ represents a same position in two image blocks, where $i = 1,2...,9$.

A computer-readable storage medium storing a computer program is provided according to the present disclosure, where the computer program is executed by a processor to perform the steps of the method described above.

An electronic device is provided according to the present disclosure, including a memory, a processor, and a computer program stored in the memory and executable in the processor, where the computer program is executed by the processor to perform the steps of the simplified method for denoising an infrared image by using NLMeans based on an FPGA.

Compared with the prior art, the present disclosure has following beneficial effects:

1. The method in the present disclosure can basically maintain a noise denoising effect of original NLMeans, and enable the NLMeans to be easily implemented on an FPGA.
2. A higher calculation speed is achieved, which is beneficial for improving denoising efficiency of an infrared image.

**BRIEF DESCRIPTION OF THE DRAWINGS**

Other features, objectives, and advantages of the present disclosure will become more apparent by reading the detailed description of non-limiting embodiments with reference to the following accompanying drawings.

FIG. 1 schematically shows point distributions of four methods at a same distance; and
FIG. 2 compares algorithms in the present disclosure.

**DETAILED DESCRIPTION OF THE EMBODIMENTS**

The present disclosure is described in detail below with reference to specific embodiments. The following embodiments will help those skilled in the art to further understand the present disclosure, but do not limit the present disclosure in any way. It should be noted that several variations and improvements can also be made by a person of ordinary skill in the art without departing from the conception of the present disclosure. These all fall within the protection scope of the present disclosure.

The present disclosure provides a simplified method and system for denoising an infrared image by using NLMeans based on an FPGA, so as to optimize a traditional NLMeans denoising algorithm, such that the optimized NLMeans denoising algorithm can be easily implemented on an FPGA without affecting a denoising effect. NLMeans is a commonly used image denoising algorithm. The original NLMeans algorithm involves complex floating-point calculation and Euclidean distance calculation. The floating-point calculation and the Euclidean distance calculation can be easily implemented on a general processor. However, when implemented on the FPGA, the floating-point calculation and the Euclidean distance calculation require a lot of resources and affect a processing speed. Therefore, in order to better implement the NLMeans algorithm on the FPGA, an original algorithm process needs to be simplified. The present disclosure mainly simplifies distance calculation. An experimental result shows that the method in the present disclosure can basically maintain a noise denoising effect of the original NLMeans, and enable the NLMeans to be easily implemented on the FPGA.

**Embodiment 1**

A simplified method for denoising an infrared image by using NLMeans based on an FPGA is provided according to the present disclosure, including following steps:

Step 1: A size of a search window and a size of a matching window are determined.
Step 2: Linear superposition is performed on a Manhattan distance and a Chebyshev distance to calculate a similarity between each matching block and a central block.
Step 3: A weight of each matching block is calculated based on the similarity.
Step 4: A current denoising result is calculated based on each matching block and the corresponding weight.

Specifically, the step 1 includes: assuming that N=11 and d=3, there are a total of 81 matching blocks.

Specifically, in the step 2, similarity Si between matching block Pi (i=1, ..., 81) and the center block Q is calculated. Original NLMeans adopts Euclidean distance calculation (method 1). However, due to complexity of calculation of a sum of squares, Manhattan distance calculation is directly adopted for simplification (method 2), but an effect loss is relatively large.

Pixels corresponding to two image blocks are calculated:

Method 1: $Si = sqrt(\Sigma(a_i - b_i)^2)$, where the Euclidean distance calculation is adopted (this method is a method used in a standard NLMeans algorithm).
Method 2: $Si = \Sigma |a_i - b_i|$, where the Manhattan distance calculation is adopted.
Method 3: $Si = \max(|a_i - b_i|)$, where Chebyshev distance calculation is adopted.

Method 4: $Si = (1 - a) \Sigma |a_i - b_i| + \alpha \max(|a_i - b_i|)$, where linear superposition is performed on a Manhattan distance and a Chebyshev distance.

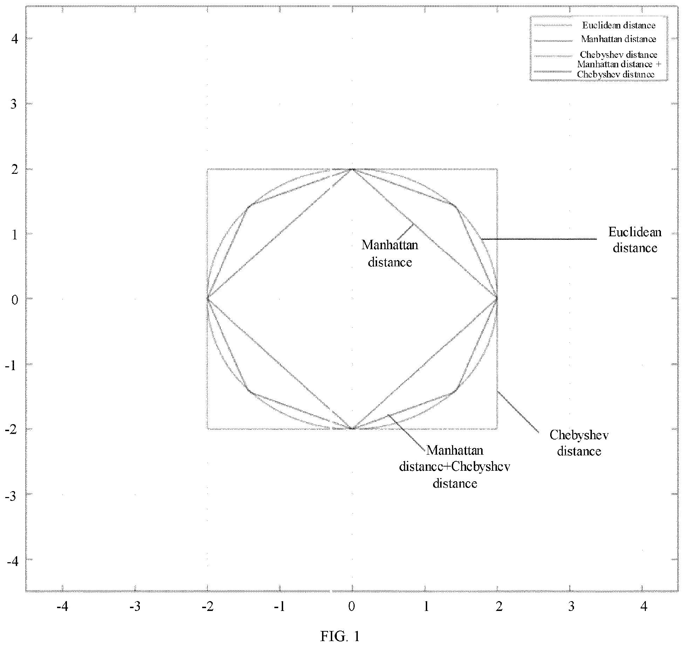

As shown in FIG. 1, it can be seen that a result of the method 4 is closest to a result of the method 1.

In the step 3, the weight is calculated based on the similarity, in other words, $w(S_i) = e^{\frac{-S_i^2}{2\sigma^2}}$, where $\sigma$ represents a level of image noise. A lookup table is created based on the Si to obtain a value of w. For example, if a value range of the Si is 0~100000, because $\sigma$ is a fixed value, corresponding to 0~100000, the corresponding w can be calculated and stored in a table. In actual use, the value of the w can be searched based on a value of the Si.

In the step 4, a denoising result of a central pixel of the central block Q is calculated according to $Q_C = \frac{\sum_{i=1}^{81} Pi_c \cdot w(S_i)}{\sum_{i=1}^{81} w(S_i)}$, where $Pi_c$ represents a center pixel of an i$^{th}$ matching block.

Therefore, a process of the original NLMeans is simplified to better adapt to implementation on the FPGA without causing a significant impact on an effect.

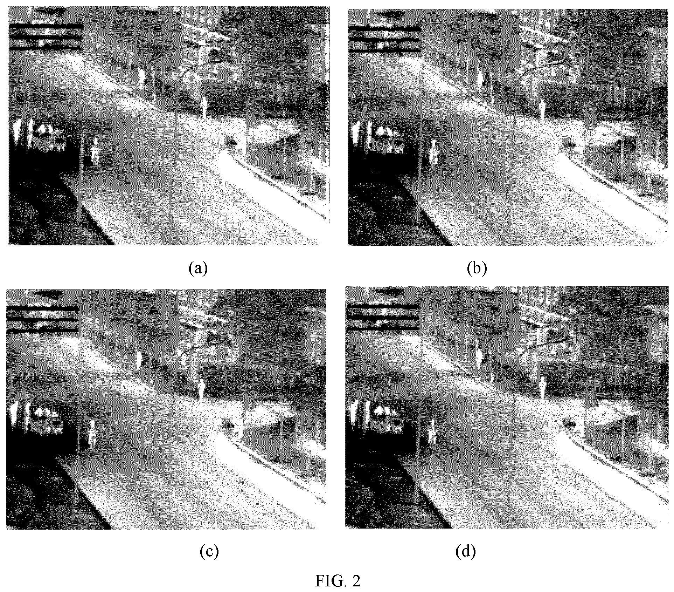

The method 1 is an effect of the original NLMeans, the method 2 adopts the Manhattan distance calculation, the method 3 adopts the Chebyshev distance calculation, and the method 4 combines the Manhattan distance and the Chebyshev distance in the present disclosure. The method 4 has an effect closer to the effect of the original NLMeans and simplifies square calculation. Specific effects are shown in FIG. 2. FIG. 2 (a) shows an effect of the method 1; FIG. 2 (b) shows an effect of the method 2; FIG. 2 (c) shows an effect of the method 3; and FIG. 2 (d) shows the effect of the method 4.

A simplified system for denoising an infrared image by using NLMeans based on an FPGA is provided according to the present disclosure, including:

module 1 configured to determine a size of a search window and a size of a matching window;
module 2 configured to perform Linear superposition on a Manhattan distance and a Chebyshev distance to calculate a similarity between each matching block and a central block;
module 3 configured to calculate a weight of each matching block based on the similarity; and
module 4 configured to calculate a current denoising result based on each matching block and the corresponding weight.

Specifically, in the module 1:
assuming that N=11 and d=3, there are a total of 81 matching blocks.

Specifically, the module 2 calculates similarity Si between matching block Pi (i=1, ..., 81) and the central block Q. Original NLMeans adopts Euclidean distance calculation (method 1). However, due to complexity of calculation of a sum of squares, Manhattan distance calculation is directly adopted for simplification (method 2), but an effect loss is relatively large.

Pixels corresponding to two image blocks are calculated:

Method 1: $Si = sqrt(\Sigma(a_i - b_i)^2)$, where the Euclidean distance calculation is adopted (this method is a method used in a standard NLMeans algorithm).
Method 2: $Si = \Sigma |a_i - b_i|$, where the Manhattan distance calculation is adopted.
Method 3: $Si = \max(|a_i - b_i|)$, where Chebyshev distance calculation is adopted.
Method 4: $Si = (1 - \alpha) \Sigma |a_i - b_i| + \alpha \max(|a_i - b_i|)$, where linear superposition is performed on a Manhattan distance and a Chebyshev distance.

As shown in FIG. 1, it can be seen that a result of the method 4 is closest to a result of the method 1.

The module 3 calculates the weight based on the similarity, in other words, $w(S_i) = e^{\frac{-S_i^2}{2\sigma^2}}$, where $\sigma$ represents a level of image noise. A lookup table is created based on the Si to obtain a value of w. For example, if a value range of the Si is 0~100000, because $\sigma$ is a fixed value, corresponding to 0~100000, the corresponding w can be calculated and stored in a table. In actual use, the value of the w can be searched based on a value of the Si.

The module 4 calculates a denoising result of a central pixel of the central block Q according to $Q_C = \frac{\sum_{i=1}^{81} Pi_c \cdot w(S_i)}{\sum_{i=1}^{81} w(S_i)}$, where $Pi_c$ represents a center pixel of an i$^{th}$ matching block.

Therefore, a process of the original NLMeans is simplified to better adapt to implementation on the FPGA without causing a significant impact on an effect.

The method 1 is an effect of the original NLMeans, the method 2 adopts the Manhattan distance calculation, the method 3 adopts the Chebyshev distance calculation, and the method 4 combines the Manhattan distance and the Chebyshev distance in the present disclosure. The method 4 has an effect closer to the effect of the original NLMeans and simplifies square calculation. Specific effects are shown in FIG. 2. FIG. 2 (a) shows an effect of the method 1; FIG. 2 (b) shows an effect of the method 2; FIG. 2 (c) shows an effect of the method 3; and FIG. 2 (d) shows the effect of the method 4.

A computer-readable storage medium storing a computer program is provided according to the present disclosure, where the computer program is executed by a processor to perform the steps of the method described above.

An electronic device is provided according to the present disclosure, including a memory, a processor, and a computer program stored in the memory and executable in the processor, where the computer program is executed by the processor to perform the steps of the simplified method for denoising an infrared image by using NLMeans based on an FPGA.

Those skilled in the art are aware that in addition to being realized by using pure computer-readable program code, the system, the apparatus, and each module thereof provided in the present disclosure can realize a same program in a form of a logic gate, a switch, an application-specific integrated circuit, a programmable logic controller, or an embedded microcontroller by performing logic programming on the method steps. Therefore, the system, the apparatus, and each module thereof provided in the present disclosure can be regarded as a kind of hardware component. The module included therein for realizing each program can also be regarded as a structure in the hardware component; and the module for realizing each function can also be regarded as a software program for implementing the method or a structure in the hardware component.

The specific embodiments of the present disclosure are described above. It should be understood that the present disclosure is not limited to the above specific implementations, and a person skilled in the art can make various variations or modifications within the scope of the claims without affecting the essence of the present disclosure. The embodiments of the present disclosure and features in the embodiments may be arbitrarily combined with each other in a non-conflicting situation.

**Claims**

1. A simplified computer-implemented method for denoising an infrared image by using non-local means (NLMeans) based on a field programmable gate array (FPGA), **characterized by** comprising:

   step S1: determining a size of a search window and a size of a matching window;
   step S2: performing linear superposition on a Manhattan distance and a Chebyshev distance to calculate a similarity between each matching block and a central block; and
   step S3: calculating a weight of each matching block based on the similarity, and calculating a current denoising result based on each matching block and the corresponding weight.

2. The simplified method for denoising the infrared image by using NLMeans based on the FPGA according to claim 1, **characterized in that** the step S1 comprises: determining the size of the search window as N*N and the size of the matching window as d*d, wherein when N=11 and d=3, there are a total of 81 matching blocks.

3. The simplified method for denoising the infrared image by using NLMeans based on the FPGA according to claim 1, **characterized in that** in the step S2, a following formula is adopted:

$$S_i = (1-a)\sum |a_i - b_i| + a\max(|a_i - b_i|),$$

wherein $S_i$ represents the similarity; $a$ represents a parameter, and each of $a_i$ and $b_i$ represents a pixel value of an image block; and a subscript $i$ represents a same position in two image blocks.

4. A simplified system for denoising an infrared image by using NLMeans based on an FPGA, **characterized by** comprising:

   a module M1 configured to determine a size of a search window and a size of a matching window;
   a module M2 configured to perform linear superposition on a Manhattan distance and a Chebyshev distance to calculate a similarity between each matching block and a central block; and
   a module M3 configured to calculate a weight of each matching block based on the similarity, and calculate a current denoising result based on each matching block and the corresponding weight.

5. The simplified system for denoising the infrared image by using NLMeans based on the FPGA according to claim 4, **characterized in that** the module M1 determines the size of the search window as N*N and the size of the matching window as d*d; and when N=11 and d=3, there are a total of 81 matching blocks.

6. The simplified system for denoising the infrared image by using NLMeans based on the FPGA according to claim 4, **characterized in that** the module M2 adopts a following formula:

$$S_i = (1-a)\sum |a_i - b_i| + a\max(|a_i - b_i|),$$

wherein $S_i$ represents the similarity; $a$ represents a parameter, and each of $a_i$ and $b_i$ represents a pixel value of an image block; and a subscript $i$ represents a same position in two image blocks.

7. A computer-readable storage medium storing a computer program, **characterized in that** the computer program is executed by a processor to perform steps of the method according to any one of claims 1 to 3.

8. An electronic device, comprising a memory, a processor, and a computer program stored in the memory and executable in the processor, **characterized in that** the computer program is executed by the processor to perform steps of the simplified method for denoising the infrared image by using NLMeans based on the FPGA according to any one of claims 1 to 3.

**Patentansprüche**

1. Vereinfachtes computerimplementiertes Verfahren zum Entrauschen eines Infrarotbildes unter Verwendung von Non-Local-Means (NLMeans) basierend auf einem feldprogrammierbaren Gate-Array (FPGA),
**dadurch gekennzeichnet, dass es** umfasst:

Schritt S1: Bestimmen einer Größe eines Suchfensters und einer Größe eines Abgleichfensters;
Schritt S2: Durchführen einer linearen Superposition an einer Manhattan-Distanz und einer Chebyshev-Distanz, um eine Ähnlichkeit zwischen jedem übereinstimmenden Block und einem zentralen Block zu berechnen; und
Schritt S3: Berechnen einer Gewichtung jedes übereinstimmenden Blocks basierend auf der Ähnlichkeit und Berechnen eines aktuellen Entrauschungsergebnisses basierend auf jedem übereinstimmenden Block und der entsprechenden Gewichtung.

2. Vereinfachtes Verfahren zum Entrauschen des Infrarotbildes unter Verwendung von NLMeans basierend auf dem FPGA nach Anspruch 1,
**dadurch gekennzeichnet, dass** der Schritt S1 umfasst: Bestimmen der Größe des Suchfensters als N * N und der Größe des Abgleichfensters als d * d, wobei, wenn N = 11 und d = 3, insgesamt 81 übereinstimmende Blöcke vorliegen.

3. Vereinfachtes Verfahren zum Entrauschen des Infrarotbildes unter Verwendung von NLMeans basierend auf dem FPGA nach Anspruch 1, **dadurch gekennzeichnet, dass** in dem Schritt S2 eine folgende Formel angewendet wird:

$$S_i = (1-a)\sum|a_i - b_i| + a\max(|a_i - b_i|),$$

wobei $S_i$ die Ähnlichkeit darstellt; $a$ einen Parameter darstellt und jedes von $a_i$ und $b_i$ einen Pixelwert eines Bildblocks darstellt; und ein Index $i$ eine gleiche Position in zwei Bildblöcken darstellt.

4. Vereinfachtes System zum Entrauschen eines Infrarotbildes unter Verwendung von NLMeans basierend auf einem FPGA,
**dadurch gekennzeichnet, dass** es umfasst:

ein Modul M1, das konfiguriert ist, um eine Größe eines Suchfensters und eine Größe eines Abgleichfensters zu bestimmen;
ein Modul M2, das konfiguriert ist, um eine lineare Superposition an einer Manhattan-Distanz und einer Chebyshev-Distanz durchzuführen, um eine Ähnlichkeit zwischen jedem übereinstimmenden Block und einem zentralen Block zu berechnen; und
ein Modul M3, das konfiguriert ist, um eine Gewichtung jedes übereinstimmenden Blocks basierend auf der Ähnlichkeit zu berechnen und ein aktuelles Entrauschungsergebnis basierend auf jedem übereinstimmenden Block und der entsprechenden Gewichtung zu berechnen.

5. Vereinfachtes System zum Entrauschen des Infrarotbildes unter Verwendung von NLMeans basierend auf dem FPGA nach Anspruch 4,
**dadurch gekennzeichnet, dass** das Modul M1 die Größe des Suchfensters als N * N und die Größe des Abgleichfensters als d * d bestimmt; und wenn N = 11 und d = 3 ist, insgesamt 81 übereinstimmende Blöcke vorliegen.

6. Vereinfachtes System zum Entrauschen des Infrarotbildes unter Verwendung von NLMeans basierend auf dem FPGA nach Anspruch 4, **dadurch gekennzeichnet, dass** das Modul M2 eine folgende Formel anwendet:

$$S_i = (1-a)\sum|a_i - b_i| + a\max(|a_i - b_i|),$$

wobei $S_i$ die Ähnlichkeit darstellt; $a$ einen Parameter darstellt und jedes von $a_i$ und $b_i$ einen Pixelwert eines Bildblocks darstellt; und ein Index $i$ eine gleiche Position in zwei Bildblöcken darstellt.

7. Computerlesbares Speichermedium, das ein Computerprogramm speichert, **dadurch gekennzeichnet, dass** das Computerprogramm durch einen Prozessor ausgeführt wird, um Schritte des Verfahrens nach einem der Ansprüche 1 bis 3 durchzuführen.

8. Elektronische Vorrichtung, die einen Speicher, einen Prozessor und ein in dem Speicher gespeichertes und in dem Prozessor ausführbares Computerprogramm umfasst, **dadurch gekennzeichnet, dass** das Computerprogramm durch den Prozessor ausgeführt wird, um Schritte des vereinfachten Verfahrens zum Entrauschen des Infrarotbildes unter Verwendung von NLMeans basierend auf dem FPGA nach einem der Ansprüche 1 bis 3 durchzuführen.

## Revendications

1. Procédé simplifié mis en œuvre par ordinateur destiné à débruiter une image infrarouge à l'aide de moyens non locaux (NLMeans) sur la base d'un réseau de portes programmables in situ (FPGA), **caractérisé par le fait qu'**il comprend :

   étape S1 : la détermination d'une taille d'une fenêtre de recherche et une taille d'une fenêtre correspondante ;
   étape S2 : le fait d'effectuer une superposition linéaire sur une distance de Manhattan et une distance de Tchebychev pour calculer une similarité entre chaque bloc correspondant et un bloc central ; et
   étape S3 : le calcul d'un poids de chaque bloc d'appariement sur la base de la similarité, et le calcul d'un résultat de débruitage actuel sur la base de chaque bloc d'appariement et du poids correspondant.

2. Procédé simplifié de débruitage de l'image infrarouge à l'aide de NLMeans basés sur le FPGA selon la revendication 1, **caractérisé en ce que** l'étape S1 comprend : la détermination de la taille de la fenêtre de recherche comme N*N et de la taille de la fenêtre de correspondance comme d*d, dans lequel lorsque N = 11 et d = 3, il y a un total de 81 blocs de concordance.

3. Procédé simplifié de débruitage de l'image infrarouge à l'aide de NLMeans basés sur le FPGA selon la revendication 1, **caractérisé en ce que,** dans l'étape S2, la formule suivante est adoptée :

$$S_i = (1-a)\sum \left|a_i - b_i\right| + a\max(\left|a_i - b_i\right|),$$

   dans lequel $S_i$ représente la similitude ; a représente un paramètre, et chacun de $a_i$ et $b_i$ représente une valeur de pixel d'un bloc d'image ; et un indice $i$ représente une même position dans deux blocs d'image.

4. Système simplifié de débruitage d'une image infrarouge à l'aide de NLMeans sur la base d'un FPGA, **caractérisé par le fait qu'**il comprend :

   un module M1 configuré pour déterminer une taille d'une fenêtre de recherche et une taille d'une fenêtre correspondante ;
   un module M2 configuré pour effectuer une superposition linéaire sur une distance de Manhattan et une distance de Tchebychev afin de calculer une similarité entre chaque bloc d'appariement et un bloc central ; et
   un module M3 configuré pour calculer un poids de chaque bloc d'appariement sur la base de la similarité, et calculer un résultat de débruitage actuel sur la base de chaque bloc d'appariement et du poids correspondant.

5. Système simplifié de débruitage de l'image infrarouge à l'aide de NLMeans basés sur le FPGA selon la revendication 4, **caractérisé en ce que** le module M1 détermine la taille de la fenêtre de recherche comme N*N et la taille de la fenêtre d'appariement comme d*d ; et lorsque N = 11 et d = 3, il y a un total de 81 blocs correspondants.

6. Système simplifié de débruitage de l'image infrarouge à l'aide de NLMeans basés sur le FPGA selon la revendication 4, **caractérisé en ce que** le module M2 adopte la formule suivante :

$$S_i = (1-a)\sum \left|a_i - b_i\right| + a\max(\left|a_i - b_i\right|),$$

   dans lequel $S_i$ représente la similitude ; a représente un paramètre, et chacun de $a_i$ et $b_i$ représente une valeur de pixel d'un bloc d'image ; et un indice i représente une même position dans deux blocs d'image.

7. Support de stockage lisible par ordinateur stockant un programme informatique, **caractérisé en ce que** le programme informatique est exécuté par un processeur pour effectuer les étapes du procédé selon l'une quelconque des revendications 1 à 3.

8. Dispositif électronique, comprenant une mémoire, un processeur et un programme informatique stocké dans la mémoire et exécutable dans le processeur, **caractérisé en ce que** le programme d'ordinateur est exécuté par le processeur pour effectuer les étapes du procédé simplifié de débruitage de l'image infrarouge à l'aide de NLMeans basés sur le FPGA selon l'une quelconque des revendications 1 à 3.

FIG. 1

(a)

(b)

(c)

(d)

FIG. 2

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107590783 A
- CN 201710754287